Europäisches Patentamt

European Patent Office

Office européen des brevets

(19)

(11) **EP 0 551 064 B1**

(12) **FASCICULE DE BREVET EUROPEEN**

(45) Date de publication et mention
de la délivrance du brevet:
**08.04.1998  Bulletin 1998/15**

(51) Int Cl.⁶: **C09D 167/02**, C09D 5/03
// (C09D167/02, 133:14)

(21) Numéro de dépôt: **92870197.8**

(22) Date de dépôt: **17.12.1992**

(54) **Compositions thermodurcissables en poudre pour la préparation de revêtements mats**

Pulverförmige wärmehärtbare Zusammensetzungen für die Herstellung von matten Überzugsmitteln

Thermosetting compositions in powder form for the preparation of matt coatings

(84) Etats contractants désignés:
**AT BE CH DE DK ES FR GB GR IE IT LI LU MC NL PT SE**

(30) Priorité:  **08.01.1992  GB 9200330**

(43) Date de publication de la demande:
**14.07.1993  Bulletin 1993/28**

(73) Titulaire: **U C B, S.A.**
**1050 Bruxelles (BE)**

(72) Inventeurs:
• **Hoebeke, Jean-Marie**
  **B-6000 Charleroi (BE)**
• **Maetens, Daniel**
  **B-1080 Bruxelles (BE)**

• **Baudour, Michel**
  **B-7387 Angreau (Honnelles) (BE)**
• **Loutz, Jean-Marie**
  **B-1180 Bruxelles (BE)**

(74) Mandataire: **Debled, Thierry et al**
**UCB S.A.**
**Département D.T.B.**
**rue d'Anderlecht 33**
**1620 Drogenbos (BE)**

(56) Documents cités:
EP-A- 0 038 635          BE-A- 676 743
US-A- 5 006 612

• **CENTRAL PATENTS INDEX, BASIC ABSTRACTS JOURNAL Week 7917, Derwent Publications Ltd., London, GB; AN 79-32542B**

**Description**

La présente invention se rapporte à des compositions thermodurcissables en poudre comprenant comme liant un mélange d'un polyester contenant des groupes carboxyle et d'un copolymère acrylique contenant des groupes glycidyle et en particulier à des compositions thermodurcissables en poudre qui donnent par cuisson des revêtements mats. L'invention se rapporte également à l'utilisation de ces compositions pour la préparation de peintures et vernis en poudre fournissant des revêtements mats, de même qu'aux revêtements mats obtenus à partir de ces compositions.

A l'heure actuelle, les compositions thermodurcissables se présentant sous la forme de poudres sont largement employées comme peintures et vernis pour le revêtement d'objets les plus divers. Les avantages de ces poudres sont nombreux; d'une part le problème de solvants est complètement supprimé, d'autre part les poudres sont utilisées à 100%, vu que seule la poudre en contact direct avec le substrat est retenue par celui-ci, l'excès de poudre étant, en principe, intégralement récupérable et réutilisable. C'est pourquoi ces compositions en poudre sont préférées par rapport aux compositions de revêtement se présentant sous la forme de solutions dans un solvant organique.

Les compositions thermodurcissables en poudre ont déjà trouvé un large débouché dans la construction des appareils électroménagers, des meubles de jardin, des bicyclettes, des accessoires de l'industrie automobile, etc.. Elles contiennent généralement un liant organique thermodurcissable, des charges, des pigments, des catalyseurs et des additifs divers pour adapter leur comportement à leur utilisation.

Il existe principalement deux types de compositions thermodurcissables en poudre; d'une part, celles qui contiennent comme liant un mélange de polymères à groupes carboxyle tels qu'un polyester ou un polyacrylate carboxylé et de composés époxydés, principalement l'isocyanurate de triglycidyle et, d'autre part, celles qui contiennent comme liant un mélange de polymères à groupes hydroxyle, le plus souvent un polyester hydroxylé avec des isocyanates bloqués au phénol, au caprolactame, etc.

La préparation de ces poudres thermodurcissables se fait généralement de la manière suivante. On mélange à sec le polymère et l'agent de réticulation, le catalyseur éventuel, les pigments, les charges et autres additifs (lorsqu'ils sont utilisés). On fait passer le mélange ainsi obtenu dans une extrudeuse pour y produire une homogénéisation en phase fondue entre 80 et 120°C. On refroidit le mélange sortant de l'extrudeuse et on le broie en une poudre ayant la granulométrie désirée comprise entre 30 et 120 micromètres. La poudre ainsi obtenue est alors appliquée de manière connue en soi au moyen d'un pistolet pulvérisateur électrostatique sur l'objet métallique à enduire, sous une différence de potentiel en moyenne de 50 kV. L'objet enduit est ensuite chauffé dans un four où est réalisée la réticulation du liant.

Les compositions en poudre donnent en général des revêtements qui présentent une bonne adhérence sur le substrat métallique (acier ou aluminium) et une excellente résistance aux intempéries. Toutefois, la plupart de ces compositions en poudre fournissent après fusion et cuisson, des revêtements présentant un brillant élevé. La brillance mesurée sous un angle de 60°, selon la norme ASTM D523, est en effet très souvent égale, voire même supérieure à 90%.

Une composition de ce genre est par exemple décrite dans le brevet européen 38635. La composition contient 60 à 97% en poids d'une résine de polyester linéaire ayant un indice d'acide de 15 à 200 mg de KOH/g et 3 à 40% en poids d'un polymère acrylique contenant des groupes glycidyle ayant un poids moléculaire moyen en nombre ($\overline{M}$n) de 300 à 5.000, de préférence de 500 à 3.000. Toutefois, ce brevet ne révèle pas la possibilité d'obtenir des revêtements mats.

Or, il existe de plus en plus un besoin de pouvoir disposer de peintures et vernis en poudre qui fournissent des revêtements mats de bonne qualité, par exemple pour le revêtement de certains accessoires de l'industrie automobile comme des jantes de roues, des pare-chocs, etc. ou encore pour le revêtement des panneaux et poutres métalliques utilisés dans la construction.

C'est la raison pour laquelle on a déjà proposé différentes méthodes pour obtenir des peintures et vernis en poudre fournissant des revêtements mats. Cependant, l'expérience a montré qu'il est difficile de réaliser une peinture en poudre capable de fournir, dans les conditions usuelles d'extrusion et de cuisson, une finition mate d'une manière tout à fait fiable et reproductible. Selon l'une de ces méthodes, on introduit dans la composition de la poudre, en plus du liant et des pigments conventionnels, un ou plusieurs agents de matité particuliers tels que de la silice, du talc, de la craie et des sels métalliques. Toutefois, la réduction du brillant est souvent insuffisante et l'on constate une altération marquée des propriétés des enduits de peinture, comme par exemple un manque d'adhérence sur le substrat métallique. Pour remédier à ces inconvénients, on propose dans le brevet européen 165.207, d'incorporer des cires, par exemple une cire de polyoléfine et des sels métalliques (par exemple le 2-benzothiazolethiolate de zinc) dans des compositions thermodurcissables en poudre à base de polyesters à groupes carboxyle terminaux et de composés époxydés tel que l'isocyanurate de triglycidyle. De même, dans le brevet américain 4.242.253, on propose comme additifs, du carbonate de calcium et des particules de polypropylène finement divisés pour réaliser des revêtements de faible brillance. L'inconvénient de ce système est que les charges inorganiques souvent incorporées en quantités importantes, peuvent endommager les extrudeuses et nuisent à l'aspect de surface recherché du revêtement obtenu, qui présente souvent un aspect rugueux et irrégulier. Par ailleurs, les cires migrent facilement en surface, ce qui provoque des variations inacceptables du degré de matité du revêtement au cours de son vieillissement naturel. En outre, le fait de devoir ajouter des charges complémentaires entraîne une dépense supplémentaire et constitue en soi un inconvénient.

Selon le brevet américain 3.842.035, il est connu de réaliser une finition mate en utilisant une composition de revêtement obtenu par mélange à sec de deux compositions thermodurcissables en poudre qui ont été extrudées séparément. Une de celles-ci est une composition durcissant lentement (temps de gel long) et l'autre une composition durcissant rapidement (temps de gel court). Par ce système, il est possible d'obtenir après cuisson, un revêtement mat sans qu'il soit nécessaire d'ajouter un agent de matité particulier à la composition en poudre. L'inconvénient majeur de ce système est de nécessiter le mélange à sec de grandes quantités de poudres formulées, ce qui n'est pas facile à réaliser, surtout à l'échelle industrielle. De plus, comme ce mélange ne peut pas se faire de manière continue, mais bien par lots de poudre, il n'est pas facile d'obtenir le même degré de matité pour les revêtements en passant d'un lot de poudre à l'autre. Enfin, la poudre qui est réutilisée dans l'application des peintures sur des substrats peut ne pas avoir la même composition que la poudre initiale, ce qui entraîne également une évolution dans le degré de matité obtenu.

Il existe encore d'autres systèmes destinés à obtenir des revêtements mats dans lesquels ont se sert de deux polymères de nature ou de réactivité différente, ainsi que de un ou plusieurs agents de réticulation, de manière à induire deux mécanismes de réticulation distincts, ou encore deux vitesses de réaction très différentes. Dans ces systèmes, la préparation de la poudre est effectuée en une seule étape à la différence du procédé décrit dans le brevet américain 3.842.035. Il est alors possible de produire en une seule extrusion, une peinture en poudre capable de former des revêtements de très faible brillant.

A titre d'exemple, dans la demande de brevet japonais 154.771/88 on décrit une composition de résine pour peinture mate pulvérulente comprenant un mélange d'un polyester hydroxylé ramifié ayant un indice d'hydroxyle élevé avec un autre polyester hydroxylé ayant un indice d'hydroxyle plus faible, dans des proportions déterminées, et un isocyanate bloqué comme agent de réticulation. Cette composition fournit après réticulation un revêtement mat possédant de bonnes propriétés mécaniques et une bonne résistance aux intempéries. Dans la demande de brevet européen 366.608, on décrit des peintures en poudre obtenues en une extrusion et fournissant des revêtements mats, mais on utilise deux agents de réticulation. Ces peintures en poudre contiennent une résine époxy, en particulier du diglycidyléther de bisphénol A, un acide polycarboxylique, comme par exemple la 2,2,5,5-tétra-(β-carboxyéthyl)-cyclopentanone comme premier agent de réticulation, et un polyester saturé terminé par des groupes carboxyle, le tolylbiguanide ou le dicyandiamide en tant que deuxième agent de réticulation.

Enfin, l'utilisation de composés qui donnent deux systèmes réactionnels de nature différente pour former des revêtements mats est décrite par exemple dans le brevet européen 104.424. On y propose la préparation d'une poudre en ne mettant en oeuvre qu'une seule extrusion. Cette poudre contient comme liant à la fois une résine hydroxylée telle qu'un polyester contenant des groupes hydroxyle et un composé polyépoxydé tel que l'isocyanurate de triglycidyle et elle renferme un agent de réticulation particulier qui comporte dans sa molécule à la fois des groupes carboxyle (pour réagir avec le composé époxydé) et des groupes isocyanate bloqué (pour réagir avec la résine hydroxylée).

Le principal désavantage des peintures en poudre obtenues en une extrusion décrites dans les brevets cités précédemment est que les conditions d'extrusion, comme le réglage des températures, du gradient de cisaillement, etc., sont très critiques et rendent particulièrement délicate l'obtention d'un revêtement ayant un degré de matité bien reproductible à partir d'une composition bien définie. En particulier, la difficulté est de trouver une composition qui produit dans les conditions usuelles d'extrusion un revêtement mat de manière tout à fait fiable et reproductible.

En conclusion, on voit que les différentes compositions thermodurcissables en poudre proposées à ce jour pour l'obtention de revêtements mats présentent toutes encore un certain nombre d'inconvénients.

Il reste donc intéressant de trouver des compositions thermodurcissables en poudre pouvant fournir des revêtements mats et ne présentant pas les défauts des compositions connues de l'état de la technique.

Conformément à la présente invention on a fait la découverte surprenante qu'en utilisant comme liant un mélange d'un polyester linéaire contenant des groupes carboxyle ayant un indice d'acide relativement faible avec un copolymère acrylique contenant des groupes glycidyle de composition déterminée et ayant un poids moléculaire se situant dans un intervalle bien défini, il est possible d'obtenir des compositions thermodurcissables en poudre donnant des revêtements mats bien reproductibles et possédant de bonnes propriétés mécaniques et une excellente résistance aux intempéries et ce, sans qu'il soit nécessaire d'ajouter des additifs particuliers pour produire la matité des revêtements.

La présente invention a donc pour objet des compositions thermodurcissables en poudre comprenant comme liant un mélange d'un polyester contenant des groupes carboxyle et d'un copolymère acrylique contenant des groupes glycidyle qui sont caractérisées en ce que le mélange contient

a) un polyester linéaire contenant des groupes carboxyle ayant un indice d'acide compris entre 20 et 50 mg de KOH/g, et
b) un copolymère acrylique contenant des groupes glycidyle obtenu à partir

- de 5% à 30% en poids d'acrylate ou méthacrylate de glycidyle, et
- de 70% à 95% en poids de méthacrylate de méthyle, jusqu'à 25% du poids total de méthacrylate de méthyle pouvant être remplacé par un autre monomère vinylique, ledit copolymère acrylique ayant un poids moléculaire moyen en nombre ($\overline{M}$n) compris entre environ 4.000 et environ 10.000.

Le terme "mat" utilisé dans la présente spécification signifie que les revêtements durcis présentent une brillance inférieure ou égale à 15%, mesurée sous un angle de 60°, selon la norme ASTM D523.

Les polyesters linéaires contenant des groupes carboxyle utilisables dans les compositions conformes à la présente invention sont des polyesters bien connus dans l'état de la technique et couramment utilisés dans les formulations de peintures et vernis en poudre pour la réalisation de revêtements destinés à l'extérieur.

Selon l'invention, le polyester utilisé doit être un polyester linéaire ayant un indice d'acide compris entre 20 et 50 mg de KOH/g; sa fonctionnalité sera donc égale à 2 (la fonctionnalité représente le nombre moyen de groupes carboxyle par unité de poids moléculaire). De préférence, son poids moléculaire moyen en nombre est compris entre 2.200 et 6.000. Il est primordial que les valeurs de ces paramètres soient respectées pour l'obtention de revêtements mats présentant de bonnes propriétés mécaniques, chimiques, et de résistance aux intempéries. En effet, si le polyester est ramifié (fonctionnalité supérieure à 2) ou lorsque l'indice d'acide du polyester est de 70 mg de KOH/g, le revêtement obtenu n'est pas mat, mais brillant (exemple 6). La température de transition vitreuse (Tg) du polyester est de préférence comprise entre 50 et 80°C, pour qu'il reste solide à la température d'entreposage (20 à 50°C), parce que les compositions thermodurcissables en poudre ne peuvent pas se réagglomérer pendant leur manipulation, leur transport et leur stockage.

Le constituant acide du polyester linéaire contenant des groupes carboxyle est un acide organique dicarboxylique qui peut être un acide dicarboxylique aromatique tel que l'acide téréphtalique, l'acide isophtalique, l'acide phtalique, etc., ou un acide dicarboxylique aliphatique ou cycloaliphatique tel que l'acide adipique, l'acide succinique, l'acide 1,4-cyclohexanedicarboxylique, etc. seuls ou en mélange. Ces acides peuvent être utilisés sous la forme de l'acide libre, ou, le cas échéant, sous la forme de l'anhydride, ou encore sous la forme d'un ester avec un alcool aliphatique inférieur.

Le constituant alcoolique du polyester linéaire contenant des groupes carboxyle est un composé organique dihydroxylé qui est de préférence choisi parmi les diols aliphatiques comme le néopentylglycol, l'éthylèneglycol, le diéthylèneglycol, le 1,4-butanediol, le 1,6-hexanediol, l'hydroxypivalate de néopentylglycol, le 1,4-cyclohexanediméthanol, le 2,2-bis(4-hydroxycyclohexyl)-propane, etc., seuls ou en mélange. De préférence, on utilise des polyesters constitués principalement d'acide téréphtalique, d'acide isophtalique et de néopentylglycol, mais on peut également utiliser des polyesters dont tous les constituants sont des composés aliphatiques.

Le polyester contenant des groupes carboxyle est préparé selon des méthodes conventionnelles de synthèse des polyesters par estérification directe ou par transestérification, en un ou plusieurs stades. Dans ce dernier cas, on prépare d'abord un polyester hydroxylé à partir d'un ou plusieurs acides organiques dicarboxyliques (ou leurs dérivés fonctionnels) et d'un excès du composé organique dihydroxylé et ensuite on estérifie le polyester hydroxylé ainsi obtenu avec un acide organique dicarboxylique pour obtenir le polyester linéaire contenant des groupes carboxyle.

On effectue généralement la synthèse du polyester dans un réacteur muni d'un agitateur, d'une arrivée et d'une sortie de gaz inerte (l'azote par exemple), d'un thermocouple, d'une colonne adiabatique, d'un condenseur, d'un séparateur d'eau et d'un tube de raccordement au vide.

Les conditions d'estérification sont classiques, à savoir que l'on peut utiliser un catalyseur d'estérification usuel, tel que l'oxyde de dibutylétain ou le trioctanoate de n-butylétain, à raison de 0,01 à 0,5% en poids des réactifs, et ajouter éventuellement un antioxydant, par exemple le phosphite de tributyle, à raison de 0,01 à 0,5% en poids des réactifs.

La polyestérification est généralement effectuée à une température que l'on augmente progressivement de 130°C à environ 200 à 240°C, d'abord sous la pression normale, puis sous pression réduite en maintenant cette température jusqu'à obtention d'un polyester présentant l'indice d'hydroxyle et/ou d'acide désiré. Lorsqu'on procède en deux stades, on laisse refroidir le mélange réactionnel contenant le polyester hydroxylé obtenu au premier stade vers 200°C, on ajoute la quantité voulue d'acide dicarboxylique, on porte la température vers 225°C et on maintient cette température d'abord sous la pression normale puis sous vide jusqu'à obtention d'un polyester contenant des groupes carboxyle ayant l'indice d'acide désiré, lequel peut varier entre 20 et 50 mg de KOH/g de polyester. Le degré d'estérification est suivi par détermination de la quantité d'eau formée au cours de la réaction et des propriétés du polyester obtenu, par exemple l'indice d'acide, le poids moléculaire ou la viscosité. Au terme de la synthèse, le polyester est coulé en une couche épaisse, on le laisse refroidir et on le broie en grains ayant une dimension moyenne allant d'une fraction de mm à quelques mm.

Les copolymères acryliques contenant des groupes glycidyle utilisables dans les compositions thermodurcissables en poudre conformes à la présente invention sont obtenus à partir de 5 à 30Z en poids d'acrylate ou méthacrylate de glycidyle et de 70 à 95Z en poids de méthacrylate de méthyle. En outre, il est possible de remplacer jusqu'à 25Z du poids total de méthacrylate de méthyle par un autre monomère vinylique.

Selon l'invention, le copolymère acrylique contenant des groupes glycidyle doit présenter un poids moléculaire moyen en nombre ($\overline{M}$n) compris entre environ 4.000 et environ 10.000, et de préférence un poids moléculaire moyen en nombre compris dans l'intervalle de plus de 5.000 à 9.000. Pour mieux contrôler ce poids moléculaire et sa distribution, la polymérisation des monomères est effectuée en présence d'un initiateur de polymérisation radicalaire et d'un agent de transfert de chaîne. La polydispersité de ces copolymères $\frac{\overline{M}w}{\overline{M}n}$ est de préférence comprise entre 1,5 et 2,5 ($\overline{M}$n) étant le poids moléculaire moyen en nombre et $\overline{M}$w étant le poids moléculaire moyen en poids).

Le copolymère acrylique contenant des groupes glycidyle est un constituant essentiel de la composition conforme à l'invention. En effet, on a fait la découverte surprenante que celui-ci joue un rôle essentiel dans l'obtention de revêtements mats présentant de bonnes propriétés d'aspect, d'adhérence sur le support métallique et de résistance aux intempéries. On a observé en effet que seules les compositions contenant des copolymères acryliques dont le poids moléculaire moyen en nombre $\overline{M}$n est situé dans l'intervalle de 4.000 à 10.000 donnent des revêtements présentant à la fois un aspect mat et régulier et une bonne adhérence sur le support métallique. Si le poids moléculaire du copolymère acrylique est inférieur à 4.000, le revêtement obtenu n'est pas mat, mais brillant. Lorsque le poids moléculaire du copolymère acrylique est supérieur à 10.000, le revêtement obtenu est mat, mais n'adhère pas suffisamment au métal et présente des défauts en surface (aspect médiocre) (exemple 4).

La composition en monomères du copolymère acrylique est également très critique pour l'obtention de revêtements mats. Lorsque sa teneur en acrylate ou méthacrylate de glycidyle dépasse 30Z en poids, le revêtement obtenu n'est pas mat, mais brillant. D'autre part, il est absolument nécessaire que le copolymère acrylique contienne une quantité prépondérante de méthacrylate de méthyle à côté de l'acrylate ou du méthacrylate de glycidyle. En effet, lorsqu'on remplace plus de 25% du poids total de méthacrylate de méthyle par d'autre(s) monomère(s) vinylique(s), on obtient un revêtement nettement plus brillant (exemple 5).

Des exemples du monomère vinylique qui peut être utilisé comme comonomère pour remplacer le méthacrylate de méthyle dans le copolymère acrylique sont les acrylates et méthacrylates d'alkyle, tels que l'acrylate de méthyle, l'acrylate d'éthyle, l'acrylate de butyle, l'acrylate de 2-éthylhexyle, le méthacrylate d'éthyle, le méthacrylate de butyle, le styrène etc.., seuls ou en mélange.

Le copolymère acrylique contenant des groupes glycidyle possède une fonctionnalité de préférence comprise entre 2 et 12 (la fonctionnalité représente le nombre moyen de groupes époxy par unité de poids moléculaire).

La teneur en groupes époxy du polymère acrylique est de préférence comprise entre 0,3 et 2,2 milliéquivalents d'époxy/g de polymère.

La température de transition vitreuse (Tg) du copolymère acrylique est de préférence comprise entre 40 et 70°C, et sa viscosité déterminée par la méthode ICI à 200°C (voir exemples), entre 8.000 et 40.000 mPa.s.

On prépare le copolymère acrylique contenant des groupes glycidyle par les techniques connues en soi de polymérisation, soit en masse, soit en émulsion, ou encore en solution dans un solvant organique. La nature du solvant n'a guère d'importance, pourvu qu'il soit inerte et qu'il dissolve bien les monomères et le copolymère synthétisé. Parmi ces solvants, on peut citer le toluène, l'acétate d'éthyle, le xylène, etc.. On copolymérise les monomères en présence d'un initiateur de polymérisation radicalaire (peroxyde de benzoyle, peroxyde de dibutyle, azo-bis-isobutyronitrile, etc.), en une quantité représentant de 0,1 à 1% en poids des monomères.

Pour obtenir un bon contrôle du poids moléculaire et de sa distribution, on ajoute également au cours de la réaction un agent de transfert de chaîne, de préférence du type mercaptan tel que le n-dodécylmercaptan, le t-dodécanethiol, l'isooctylmercaptan, etc. ou du type halogénure de carbone, tel que le tétrabromure de carbone, le bromotrichlorométhane, etc.. . On utilise l'agent de transfert de chaîne en une quantité comprise entre 1,5 et 4%, de préférence entre 2 et 3,5% en poids des monomères engagés dans la copolymérisation.

Pour la préparation du copolymère acrylique contenant des groupes glycidyle, on utilise en général un réacteur cylindrique, à double enveloppe, muni d'un agitateur, d'un réfrigérant, d'une arrivée et d'une sortie de gaz inerte (azote par exemple) et d'un système d'alimentation par pompe doseuse.

Les conditions de la polymérisation sont classiques. Ainsi, dans le cas de la préparation par polymérisation en solution par exemple, on introduit le solvant organique dans le réacteur et on l'amène à reflux sous atmosphère d'un gaz inerte (azote, dioxyde de carbone, etc...), puis on y ajoute progressivement en plusieurs heures, un mélange homogène des monomères, de l'initiateur de polymérisation radicalaire et de l'agent de transfert de chaîne. On maintient le mélange réactionnel encore pendant quelques heures sous agitation à reflux, puis on distille la majeure partie du solvant. Par la suite, on débarrasse le copolymère obtenu du reste du solvant sous vide. Le copolymère acrylique obtenu se présente sous la forme d'un produit solide, que l'on broie facilement en une poudre blanchâtre.

Le polyester linéaire contenant des groupes carboxyle et le copolymère acrylique contenant des groupes glycidyle décrits ci-dessus, constituent conjointement le liant de base des compositions thermodurcissables en poudre selon la présente invention.

La présente invention se rapporte également à l'utilisation des compositions thermodurcissables en poudre conformes à l'invention pour la préparation de vernis et peintures en poudre fournissant des revêtements mats, ainsi qu'aux vernis et peintures en poudre obtenus à l'aide de ces compositions.

Dans les compositions thermodurcissables en poudre conformes à l'invention, le rapport de quantité entre le polyester linéaire contenant des groupes carboxyle et le copolymère acrylique contenant des groupes glycidyle est tel qu'il y a de 0,5 à 1,5 et de préférence de 0,8 à 1,2 équivalents de groupes carboxyle par équivalent de groupes époxy dans le copolymère acrylique.

Les compositions thermodurcissables en poudre conformes à l'invention peuvent être préparées en mélangeant de manière homogène le polyester linéaire contenant des groupes carboxyle et le copolymère acrylique contenant des groupes glycidyle avec les diverses substances auxiliaires utilisées conventionnellement pour la fabrication de peinture et vernis en poudre.

Cette homogénéisation est exécutée par exemple en fondant le polyester, le copolymère acrylique et les diverses substances auxiliaires à une température située dans l'intervalle de 90 à 110°C, de préférence dans une extrudeuse, par exemple une extrudeuse Buss-Ko-Kneter ou une extrudeuse à double vis de type Werner-Pfleiderer ou Baker Perkins. Ensuite, on laisse refroidir l'extrudat, on le broie et on le tamise pour obtenir une poudre dont la dimension de particules est comprise entre 20 et 100, de préférence entre 30 et 40 micromètres.

Les substances auxiliaires qui peuvent être ajoutées aux compositions thermodurcissables en poudre sont par exemple des pigments comme le dioxyde de titane ou les oxydes de fer, des colorants organiques, etc., des charges comme le sulfate de baryum ou le sulfate ou carbonate de calcium, des agents régulateurs de fluidité comme le Resiflow PV5 (de WORLEE) ou le Modaflow (de MONSANTO), ou l'Acronal 4F (de BASF), des plastifiants comme le phtalate de dicyclohexyle, le phosphate de triphényle et des agents auxiliaires de broyage. Ces substances auxiliaires sont utilisées en des quantités usuelles, étant entendu que si les compositions thermodurcissables conformes à l'invention sont utilisées comme vernis, on omettra l'addition de substances auxiliaires ayant des propriétés opacifiantes. On peut également ajouter des catalyseurs de réticulation connu en soi de type amine, phosphine, sels d'ammonium ou de phosphonium. Toutefois, ces catalyseurs ne sont réellement utiles que pour les compositions dont la vitesse de réticulation est très lente. En effet, pour les compositions dont la vitesse de réticulation est élevée, la présence d'un catalyseur n'est pas recommandable. Il peut en effet provoquer une perte de la matité du revêtement obtenu. Quelques essais préliminaires permettent de déterminer facilement si la présence d'un catalyseur est souhaitable.

Un autre objet de la présente invention est l'utilisation des compositions thermodurcissables en poudre de l'invention pour l'obtention de revêtements mats, en particulier sur la surface d'objets métalliques tels que l'acier ou l'aluminium.

Les compositions thermodurcissables en poudre conviennent pour une application par les techniques traditionnelles, c'est-à-dire par application au pistolet pulvérisateur dans un champ électrostatique ou au pistolet triboélectrique dans lequel la poudre se charge par friction, ou encore par la technique bien connue du dépôt en lit fluidisé.

Après avoir été appliqués sur l'article concerné, les revêtements déposés sont durcis par cuisson au four à une température comprise entre 160 et 210°C, pendant une durée pouvant atteindre 30 minutes en vue d'obtenir la réticulation complète du revêtement.

Comme on le montre plus en détails dans les exemples qui vont suivre, les compositions thermodurcissables en poudre conformes à la présente invention permettent d'obtenir des revêtements présentant une très faible brillance. En effet, cette brillance, mesurée sous un angle de 60°C, selon la norme ASTM D 523 est toujours inférieure à 15%.

De plus, grâce à la présente invention, on obtient des revêtements mats qui présentent un ensemble d'autres propriétés favorables, entre autres, une surface lisse et régulière, sans défauts apparents, une bonne adhérence sur les surfaces métalliques, de même qu'une excellente résistance aux intempéries et aux rayons UV. L'obtention d'une finition mate ne s'accompagne donc pas d'une altération des autres propriétés des revêtements comme dans les compositions de l'état de la technique, dans lesquelles on incorpore un ou plusieurs agents de matité particuliers (silice, cires, etc...) pour obtenir des revêtements mats.

Les compositions selon l'invention présentent en outre l'avantage de ne pas comporter de composant toxique, tel que l'isocyanurate de triglycidyle, comme c'est le cas pour bon nombre de compositions thermodurcissables en poudre de l'état de la technique.

Par ailleurs, les conditions de mise en oeuvre des peintures en poudre conformes à l'invention comme par exemple les conditions d'extrusion et les températures de cuisson des revêtements ne sont nullement critiques. Grâce aux compositions en poudre de l'invention, on obtient donc une finition mate de manière tout à fait sûre et reproductible. Enfin sur le plan économique, les compositions en poudre de l'invention sont moins coûteuses et d'une mise en oeuvre plus aisée, parce que le liant de base ne contient que deux constituants, en l'occurrence, le polyester linéaire contenant des groupes carboxyle et le copolymère acrylique contenant des groupes glycidyle, alors que les compositions thermodurcissables en poudre de l'état de la technique contiennent souvent au moins un troisième constituant pour apporter l'effet mat.

Les exemples qui vont suivre illustrent l'invention sans la limiter. Dans ces exemples, la détermination de certaines valeurs caractéristiques a été effectuée selon les méthodes décrites ci-dessous :

- brillance : elle est exprimée en intensité de la lumière réfléchie, en pour-cent, par rapport à l'intensité de la lumière incidente sous un angle de 60° et mesurée selon la norme ASTM D 523;
- aspect des revêtements : cet aspect est jugé par un examen visuel des enduits déposés; on attribue deux cotes, l'une bonne ("B") si le revêtement est régulier, uniforme et sans défauts apparents, l'autre mauvaise ("M") si le revêtement est irrégulier et présente des défauts de surface tels que des cratères, des grains, des piqûres, etc.;
- test QUV : des panneaux en aluminium revêtus de la peinture en poudre à tester sont placés dans un appareil "QUV Panel", de la société Q-Panel Co (Cleveland - Etats-Unis) et soumis à plusieurs cycles d'exposition à des lampes UV et à l'humidité, à diverses températures. Parmi les différents cycles de ce type décrits dans la norme ASTM G 5388, dans le cas présent, on a soumis les revêtements à un cycle de 8 heures d'exposition à une lampe UVB 313, à 60°C, et de 4 heures de condensation de vapeur d'eau, lampe éteinte, à 40°C; l'évolution de la brillance n'étant pas très significative pour des revêtements mats, on a déterminé l'évolution de l'aspect des revêtements, leur adhérence au métal et leur changement de teinte delta E après 1.000 heures d'exposition à ce test. Le changement de teinte delta E a été déterminé dans le système CIELAB au moyen d'un spectrophotomètre du type Colorquest CT 1100 de la société Hunter Associates Lab. (U.S.A.);
- adhérence : déterminée selon la norme ASTM D 3002; on découpe 100 petits carrés de 1 mm$^2$ de surface dans le revêtement, que l'on recouvre d'un papier collant, qui est ensuite arraché; la cotation se fait en nombre de petits carrés sur 10, restés intacts, c'est-à-dire, on compte le nombre de petits carrés qui n'ont pas été arrachés lors du test;
- l'indice d'acide (IA) a été mesuré selon la norme DIN 53402 par titration au moyen d'une solution méthanolique de KOH 0,1N;
- la fonctionnalité représente le nombre de groupes fonctionnels (par exemple de groupes carboxyle du polyester linéaire ou de groupes époxy du copolymère acrylique) présents, en moyenne, par unité de poids moléculaire moyen en nombre $\overline{M}n$;
- le poids moléculaire moyen en nombre, $\overline{M}n$, des copolymères acryliques contenant des groupes glycidyle a été mesuré par chromatographie de perméation sur gel, l'appareil étant calibré au moyen de standards de polystyrène homodispersés (c'est-à-dire où $\frac{\overline{M}w}{\overline{M}n} = 1$); le poids moléculaire moyen en nombre des polyesters linéaires contenant des groupes carboxyle a été déterminé par la relation

$$\overline{M}n = \frac{\text{fonctionnalité X 56.100}}{IA},$$

où IA est l'indice d'acide exprimé en mg de KOH/g de polyester;
- la viscosité a été mesurée à 200°C au viscosimètre cône/plateau, connue sous le nom de "viscosité ICI", selon la norme ASTM D 4287-88; elle est exprimée en mPa.s.

Sauf indication contraire, les parties citées dans les exemples, sont des parties en poids.

Exemple 1. Synthèse de polyesters linéaires contenant des groupes carboxyle.

La synthèse de ces polyesters a été effectuée en deux stades : dans le premier stade, on prépare un polyester hydroxylé et dans le deuxième stade on estérifie le polyester hydroxylé ainsi obtenu avec un acide organique dicarboxylique.

1er stade.

Dans un réacteur cylindrique à double enveloppe muni d'un agitateur, d'une arrivée et d'une sortie d'azote, d'un thermocouple, d'une colonne adiabatique, d'un condenseur, d'un séparateur d'eau et d'un tube de raccordement au vide, on introduit 1406,15 parties de néopentylglycol. On chauffe à 130°C jusqu'à ce que le produit soit fondu et on introduit alors 2076,83 parties d'acide téréphtalique et 8,71 parties de trioctanoate de n-butylétain comme catalyseur d'estérification. Puis, on élève progressivement la température du mélange réactionnel à 225°C. Lorsque le mélange réactionnel devient limpide (ce qui correspond généralement à un taux d'estérification voisin de 95Z), on établit progressivement un vide de 50 mm Hg et on poursuit l'opération sous vide jusqu'à obtention d'un polyester hydroxylé, dont l'indice d'hydroxyle est de 37 mg de KOH/g.

2ème stade.

On refroidit le polyester hydroxylé obtenu au premier stade vers 200°C et l'on y ajoute 230,19 parties d'acide adipique. Dès qu'un mélange homogène est obtenu, on porte la température à 225°C et on maintient cette température pendant environ 2 heures, jusqu'à ce que le mélange réactionnel soit limpide. On termine la réaction sous vide, jusqu'à obtention d'un polyester contenant des groupes carboxyle, ayant un indice d'acide de 24 mg de KOH/g. Le poids moléculaire moyen $\overline{M}$n du polyester linéaire contenant des groupes carboxyle obtenu est de 5.610 et sa fonctionnalité est de 2. Dans ce qui suit, ce polyester est numéroté 1a.

Selon le même mode opératoire, on prépare les polyesters 1b et 1c, destinés à être utilisés dans les compositions conformes à l'invention, ainsi que les polyesters 1d et le, utilisés à titre de comparaison. Le tableau I ci-dessous indique pour chaque stade de synthèse des polyesters, la nature et les quantités des matières de départ, l'indice d'hydroxyle (IOH) du polyester hydroxylé de même que l'indice d'acide (IA), le poids moléculaire moyen $\overline{M}$n et la fonctionnalité du polyester contenant des groupes carboxyle final obtenu. Les produits de départ sont désignés par les abréviations suivantes :

ATP : acide téréphtalique.
AIP : acide isophtalique.
AAd : acide adipique.
NPG : néopentylglycol.
TMP : triméthylolpropane.
BPAH : bisphénol A hydrogéné.

TABLEAU I

| Polyester | Stade 1 (parties) | IOH (mg de KOH/g) | Stade 2 (parties) | IA (mg de KOH/g) | $\overline{M}$n | Fonctionnalité |
|---|---|---|---|---|---|---|
| 1b | ATP(1438,9) AAd(75,73) NPG(1060,2) | 50 | AIP(295,89) | 35 | 3205 | 2 |
| 1c | ATP(873,05) AAd(45,95) NPG(684,23) | 80 | AIP(288,66) | 50 | 2244 | 2 |
| 1d | ATP(1780,96) NPG(1185,26) TMP(45,62) | 50 | AAd(244,65) | 20 | 8465 | 3(1) |
| 1e | ATP(647,76) NPG(430,34) BPAH(184,43) | 100 | AIP(204,84) AAd(92,03) | 70(1) | 1603 | 2 |

(1) à titre comparatif

Exemple 2. Synthèse de copolymères acryliques contenant des groupes glycidyle.

Dans un réacteur cylindrique, à double enveloppe, d'une capacité de 2 litres et muni d'un agitateur à ancre, d'un réfrigérant, d'une arrivée et d'une sortie d'azote et d'un système d'alimentation par pompe doseuse à partir d'un bac en charge, on introduit 480 parties d'acétate d'éthyle que l'on amène au reflux sous atmosphère d'azote. Ensuite, on introduit, en 4 heures environ, sous agitation, un mélange homogène composé de 400 parties de méthacrylate de méthyle, 100 parties de méthacrylate de glycidyle, 5 parties d'azo-bis-isobutyronitrile et 15 parties de n-dodécylmercaptan. Après avoir ajouté l'entièreté de ce mélange, on maintient le mélange réactionnel encore pendant 2 heures sous agitation à 80 °C, puis, on distille la majeure partie du solvant et on vide le contenu du réacteur dans un récipient en aluminium. On place ce dernier à 60°C, sous un vide inférieur à 50 mm Hg, pendant 16 heures, pour éliminer le reste du solvant. Le copolymère acrylique contenant des groupes glycidyle obtenu se présente sous la forme d'un produit solide, que l'on broie aisément en une poudre blanchâtre.

Le copolymère acrylique ainsi obtenu possède les caractéristiques suivantes: Tg: 55-60°C (déterminée par calorimétrie à balayage différentiel ou DSC); viscosité: 15.400 mPa.s; $\overline{M}$n: 6.050. Dans ce qui suit, ce copolymère est numéroté 2a.

En suivant le même mode opératoire, on a préparé une série d'autres copolymères acryliques contenant des groupes glycidyle, en faisant varier la nature et les proportions des monomères mis en oeuvre, de même que la quantité d'agent de transfert de chaîne dans le but d'obtenir des copolymères de différents poids moléculaires. Les compositions de ces différents copolymères, numérotés 2b à 2p, sont décrites dans les exemples 4 à 6 ci-après, de même que leurs caractéristiques (viscosité et poids moléculaire moyen $\overline{M}$n).

Exemple 3. Préparation de compositions thermodurcissables en poudre.

On prépare ces compositions en mélangeant un liant composé d'un polyester contenant des groupes carboxyle préparé comme décrit à l'exemple 1 et un copolymère acrylique contenant des groupes glycidyle préparé comme décrit à l'exemple 2, avec les diverses substances auxiliaires utilisées conventionnellement pour la fabrication des peintures et vernis en poudre. Le mélange obtenu est homogénéisé à une température d'environ 105°C dans une extrudeuse (du type APV à double vis : MP 20/30 de la société Baker-Perkins) et l'extrudat est concassé et broyé dans un broyeur du type "disque à dents" ( de la société Alpine), puis tamisé pour former une poudre dont la dimension des particules est comprise entre 40 et 60 micromètres.

Une composition type est la suivante :

| | |
|---|---|
| Polyester 1b | 420 parties |
| Copolymère 2a | 180 parties |
| Dioxyde de titane (1) | 400 parties |
| Agent régulateur de fluidité (2) | 7 parties |
| Benzoïne | 3 parties |

(1) Kronos CL310 (Ciba-Geigy)
(2) Résiflow PV5 (Worlée Chemie).

Dans cette composition, ci-après numérotée 3.1, le rapport en poids polyester/copolymère acrylique est de 70/30. Les propriétés des revêtements obtenus avec ces compositions sont testées en appliquant la poudre par projection à l'aide d'un pistolet pulvérisateur électrostatique sur des plaques d'acier dégraissé sous une tension de 50 kV. L'épaisseur du dépôt ainsi formé est de 60 à 80 micromètres.

Les compositions déposées subissent ensuite une cuisson de 15 minutes à 200°C, et on soumet les revêtements obtenus après cuisson aux essais décrits plus haut.

Exemple 4. Effet du poids moléculaire moyen du copolymère acrylique contenant des groupes glycidyle sur les propriétés des revêtements obtenus.

On met en évidence dans cet exemple l'importance du poids moléculaire moyen du copolymère acrylique contenant des groupes glycidyle pour l'obtention de revêtements mats. On prépare d'abord une série de copolymères acryliques selon le mode opératoire de l'exemple 2, mais avec des quantités croissantes d'agents de transfert de chaîne de manière à obtenir des copolymères de différents poids moléculaires. Ensuite, on prépare des compositions thermodurcissables en poudre comme à l'exemple 3 à partir du polyester 1b décrit à l'exemple 1 et des copolymères acryliques ayant différents poids moléculaires $\overline{M}$n. Ces différentes compositions et les propriétés des revêtements obtenus sont décrites au tableau II dans lequel:

la 1e ligne donne le numéro du copolymère acrylique entrant dans la composition,
la 2e ligne, le % en poids de l'agent de transfert de chaîne (n-dodécylmercaptan) par rapport au poids total de monomères utilisé dans la synthèse du copolymère acrylique,
la 3e ligne, la viscosité en mPa.s du copolymère acrylique,
la 4e ligne, le poids moléculaire moyen $\overline{M}$n du copolymère acrylique,
la 5e ligne, le numéro de la composition contenant le copolymère acrylique et le polyester 1b dans le rapport en poids indiqué à l'exemple 3,
les 6e, 7e et 8e lignes, respectivement la brillance, l'adhérence et l'aspect des revêtements obtenus à partir des compositions dans les conditions décrites à l'exemple 3.

Tableau II

| Propriétés des revêtements en fonction du $\overline{M}n$ du copolymère acrylique | | | | | | |
|---|---|---|---|---|---|---|
| Copolymère n° | 2b | 2c | 2d | 2a | 2e | 2f |
| Agent de transfert (%) | 1 | 2 | 2,5 | 3 | 3,5 | 6 |
| Viscosité (mPa.s) | 49.000 | 26.500 | 20.100 | 15.400 | 9.900 | 3.200 |
| $\overline{M}n$ | 11.030 | 7.920 | 6.970 | 6.050 | 4.920 | 2.640 |
| Composition n° | 3.2(1) | 3.3 | 3.4 | 3.1 | 3.5 | 3.6(1) |
| Brillance | 5 | 7 | 8,5 | 7 | 8 | 83 |
| Adhérence | 0 | 10 | 10 | 10 | 10 | 10 |
| Aspect | M | B | B | B | B | B |

(1) à titre comparatif.

On voit que seules les compositions 3.3, 3.4, 3.1 et 3.5 donnent des revêtements qui possèdent l'ensemble des propriétés souhaitées, c'est-à-dire un aspect mat et régulier et de bonnes propriétés mécaniques (adhérence).

En effet, la composition 3.6 (comparative) qui contient le copolymère acrylique 2f d'un poids moléculaire $\overline{M}n$ de 2.640 (inférieur à 4000), donne des revêtements possédant de bonnes propriétés d'adhérence et d'aspect, mais qui sont très brillants (brillance de 83).

Par ailleurs, la composition de comparaison 3.2 qui contient le copolymère acrylique 2b d'un poids moléculaire $\overline{M}n$ de 11.030, donc supérieur à 10.000, donne un revêtement mat (brillance de 5), mais de qualité (adhérence et aspect) nettement insuffisante pour la rendre utilisable dans la pratique.

Exemple 5. Influence de la composition en monomères du copolymère acrylique contenant des groupes glycidyle sur les propriétés des revêtements obtenus.

On prépare pour l'essai une série de copolymères acryliques selon le mode opératoire de l'exemple 2, en faisant varier toutefois la nature et la quantité des monomères ainsi que la quantité d'agent de transfert de chaîne. On prépare ensuite des compositions thermodurcissables de la même manière qu'à l'exemple 3 à partir du polyester 1b et ces copolymères acryliques en maintenant toutefois un rapport en équivalents epoxy/carboxyle égal à 1. Pratiquement, pour un copolymère contenant 10% en poids de méthacrylate de glycidyle, on met en oeuvre 55 parties de polyester pour 45 parties de copolymère acrylique; pour un copolymère contenant 20% en poids de méthacrylate de glycidyle, le rapport pondéral polyester/copolymère acrylique est de 70/30; pour un copolymère contenant 25% de méthacrylate de glycidyle, ce rapport pondéral est de 77/23, et pour un copolymère contenant 40% de méthacrylate de glycidyle, ce rapport pondéral est de 83/17.

Ces différentes compositions et les propriétés obtenues sont décrites au tableau III dans lequel :

la 1e ligne donne le numéro du copolymère acrylique entrant dans la composition,
les 2e, 3e, 4e et 5e lignes, la composition détaillée du copolymère acrylique,
la 6e ligne, le % en poids de l'agent de transfert de chaîne (n-dodécylmercaptan) par rapport au poids total de monomères utilisé dans la synthèse du copolymère acrylique,
la 7e ligne, la viscosité en mPa.s du copolymère acrylique,
la 8e ligne, le poids moléculaire moyen $\overline{M}n$ du copolymère acrylique,
la 9e ligne, le numéro de la composition contenant le copolymère et le polyester 1b,
les 10, 11 et 12e lignes, respectivement la brillance, l'adhérence et l'aspect des revêtements obtenus à partir des compositions dans les conditions décrites à l'exemple 3.

Dans ce tableau, on a repris les données de l'exemple 4 concernant les copolymères 2c, 2a et 2e et les compositions correspondantes 3.3, 3.1 et 3.5 pour étoffer les comparaisons. Les quatre composés utilisés pour la préparation des copolymères acryliques sont désignés par les abréviations suivantes :

| MAM | méthacrylate de méthyle |
|---|---|
| MAG | méthacrylate de glycidyle |
| ABu | acrylate de n-butyle |
| STY | styrène. |

EP 0 551 064 B1

## Tableau III

Propriétés des revêtements en fonction de la composition du copolymère acrylique.

| Copolymère n° | 2g | 2c | 2h | 2i | 2j | 2a | 2k | 21 | 2m | 2n | 2e | 2o | 2p |
|---|---|---|---|---|---|---|---|---|---|---|---|---|---|
| Composition du copolymère | | | | | | | | | | | | | |
| MAM (%) | 90 | 80 | 75 | 60 | 60 | 80 | 40 | 100 | 90 | 72 | 80 | 75 | 60 |
| MAG (%) | 10 | 20 | 25 | 25 | 40 | 20 | 20 | 0 | 10 | 10 | 20 | 25 | 40 |
| ABu (%) | 0 | 0 | 0 | 15 | 0 | 0 | 10 | 0 | 0 | 18 | 0 | 0 | 0 |
| STY (%) | 0 | 0 | 0 | 0 | 0 | 0 | 30 | 0 | 0 | 0 | 0 | 0 | 0 |
| Agent de transfert (%) | 2 | 2 | 2 | 2 | 2 | 3 | 3 | 3 | 3,5 | 3,5 | 3,5 | 3,5 | 3,5 |
| Viscosité (mPa.s) | 39.500 | 26.500 | 31.000 | 12.000 | 20.000 | 15.400 | 1.800 | 22.000 | 16.000 | 8.100 | 9.900 | 10.200 | 8.900 |
| $\bar{M}n$ | 8.210 | 7.920 | 8.190 | 8.050 | 8.000 | 6.050 | 5.987 | 6.120 | 4.760 | 5.210 | 4.920 | 5.130 | 5.180 |
| Composition n° | 3.7 | 3.3 | 3.8 | 3.9 | 3.10(1) | 3.1 | 3.11(1) | 3.12(1) | 3.13 | 3.14 | 3.5 | 3.15 | 3.16(1) |
| Brillance | 9 | 7 | 12 | 10 | 41 | 7 | 64 | 69 | 12 | 10 | 8 | 11 | 72 |
| Adhérence | 10 | 10 | 10 | 10 | 10 | 10 | 10 | 2 | 10 | 10 | 10 | 10 | 10 |
| Aspect | B | B | B | B | B | B | B | M | B | B | B | B | B |

(1) à titre comparatif

Les résultats du tableau III montrent que le copolymère acrylique doit contenir une certaine quantité de méthacrylate de glycidyle pour permettre la réticulation de l'enduit. En effet, la composition comparative 3.12 qui renferme le polymère acrylique 21 ne contenant pas de méthacrylate de glycidyle (O%), donne un revêtement présentant des propriétés qui sont nettement moins bonnes (adhérence : 2) et un aspect irrégulier. Par ailleurs, on constate que lorsque la teneur en méthacrylate de glycidyle du copolymère acrylique est trop élevée, il n'est plus possible d'obtenir des revêtements mats. Ainsi, par exemple, la composition comparative 3.10 renfermant le copolymère 2j qui contient 40Z en poids de méthacrylate de glycidyle fournit un revêtement brillant (brillance de 41) et la composition comparative 3.16 contenant le copolymère 2p de même composition mais de poids moléculaire plus faible fournit également un revêtement brillant. Ceci démontre que pour obtenir un revêtement mat il n'y a pas intérêt à utiliser un copolymère acrylique qui contient plus de 30Z en poids de méthacrylate de glycidyle par rapport au poids total des monomères.

En outre, on voit que le copolymère acrylique doit contenir une quantité prépondérante de méthacrylate de méthyle à côté du méthacrylate de glycidyle. En effet, lorsqu'on compare les résultats obtenus avec la composition 3.9 (copolymère 2i) et la composition 3.14 (copolymère 2n) respectivement avec la composition 3.8 (copolymère 2h) et la composition 3.13 (copolymère 2m), on constate que l'on peut remplacer le méthacrylate de méthyle par une faible quantité d'un autre monomère vinylique (p.ex. l'acrylate de butyle), tout en obtenant toujours un revêtement mat. Toutefois, il est à recommander de ne pas remplacer plus de 25Z du poids total de méthacrylate de méthyle par d'autre(s) monomère(s) vinylique(s). En effet, à des taux de substitution plus élevés (composition 3.11), on obtient un revêtement nettement plus brillant (brillance de 64).

Enfin, on voit que les compositions conformes à l'invention 3.1, 3.3, 3.5, 3.7 à 3.9, et 3.13 à 3.15 qui contiennent des copolymères acryliques avec la teneur voulue en méthacrylate de glycidyle et en méthacrylate de méthyle, donnent par cuisson des revêtements mats, dont la brillance est inférieure ou égale à 12 et qui présentent une excellente adhérence et un très bon aspect.

Exemple 6. Influence de la nature du polyester contenant des groupes carboxyle sur les propriétés des revêtements obtenus.

Cet exemple a pour but de mettre en évidence l'influence de la nature du polyester contenant des groupes carboxyle sur les propriétés des revêtements obtenus. A cet effet, on prépare des compositions thermodurcissables en poudre selon le mode opératoire de l'exemple 3, à partir des polyesters la à le décrits à l'exemple 1 et du copolymère acrylique 2a décrit à l'exemple 2. Dans ces compositions thermodurcissables, on maintient toujours le rapport en équivalents époxy/carboxyle égal à 1. C'est pourquoi, on met en oeuvre les polyesters la et 1d (IA=20) et le copolymère acrylique 2a dans un rapport en poids de 80/20, le polyester 1b (IA=35) et le copolymère 2a dans un rapport en poids de 70/30, le polyester 1c (IA=50) et le copolymère 2a dans un rapport en poids 60/40 et le polyester le (IA=70) et le copolymère 2a dans un rapport en poids de 53/47.

Les résultats obtenus avec les compositions thermodurcissables sont reportés dans le tableau IV dans lequel :

la 1e ligne donne le numéro du polyester entrant dans la composition,
la 2e ligne, l'indice d'acide (IA) de celui-ci,
la 3e ligne, sa fonctionnalité,
la 4e ligne, le numéro de la composition contenant le copolymère acrylique 2a et le polyester dans les proportions indiquées ci-dessus,
les 5e, 6e et 7e lignes, respectivement la brillance, l'adhérence et l'aspect des revêtements obtenus à partir des compositions dans les conditions décrites à l'exemple 3.

Tableau IV

| Propriétés des revêtements en fonction de la nature du polyester | | | | | | |
|---|---|---|---|---|---|---|
| Polyester n° | 1a | 1a | 1b | 1c | 1d | 1e |
| IA | 24 | 24 | 35 | 50 | 20 | 70 |
| Fonctionnalité | 2 | 2 | 2 | 2 | 3 | 2 |
| | | | | | | |
| Composition n° | 3.17 | 3.18(2) | 3.1 | 3.19 | 3.20(1) | 3.21(1) |
| Brillance | 7 | 11 | 7 | 9 | 74 | 39 |
| Adhérence | 10 | 10 | 10 | 10 | 10 | 10 |
| Aspect | B | B | B | B | B | B |

(1) à titre comparatif
(2) plus 0,2 partie de bromure d'éthyltriphénylphosphonium (BETP) comme catalyseur de réticulation.

Comme le montre le résultat obtenu avec la composition de comparaison 3.20,on n'obtient pas un revêtement mat (brillance de 74) avec un polyester ramifié, de fonctionnalité égale à 3. On voit également qu'il n'est pas possible d'obtenir un revêtement mat (brillance de 39) avec un polyester dont l'indice d'acide est de 70 mg de KOH/g (composition de comparaison 3.21). La composition 3.18, qui est en tout point semblable à la composition 3.17, si ce n'est qu'elle contient 0,2% en poids d'un catalyseur de réticulation, permet aussi d'obtenir un revêtement mat (brillance de 11).

En conclusion, on voit que pour obtenir des revêtements mats d'excellente qualité, il est absolument nécessaire que le polyester utilisé soit linéaire et qu'il possède un indice d'acide compris entre 20 et 50 mg de KOH/g. On notera aussi que la présence d'une faible quantité de catalyseur de réticulation dans ces compositions est acceptable.

Exemple 7. Résistance aux intempéries des revêtements mats obtenus à partir des compositions thermodurcissables en poudre.

Dans cet exemple, on met en évidence l'excellent comportement des revêtements mats conformes à l'invention vis-à-vis des intempéries. A cet effet, on se sert des compositions thermodurcissables en poudre suivantes :

a) les compositions préparées à l'exemple 5 à partir du polyester 1b et les copolymères acryliques 2g, 2c, 2i, 2j, 2a et 2n, dont la composition est donnée au tableau III de cet exemple. Ces compositions sont préparées selon le mode opératoire de l'exemple 3 en maintenant toutefois un rapport en équivalents epoxy/carboxyle égal à 1; elles donnent par cuisson des revêtements de couleur blanche;

b) les compositions indiquées en a) ci-dessus mais dans lesquelles on a remplacé les 400 parties de dioxyde de titane par 400 parties du mélange suivant :

- Blanc fixe N : 200 parties
- Dioxyde de titane Kronos CL310 : 40 parties
- Oxyde de fer noir (Bayer) : 160 parties.

Ces compositions donnent par cuisson des revêtements de couleur grise.

Les propriétés des revêtements obtenus avec ces compositions sont testées en appliquant la poudre par projection à l'aide d'un pistolet pulvérisateur électrostatique sur des panneaux en aluminium sous une tension de 50 kV. L'épaisseur du dépôt formé est de 60 à 80 micromètres. On soumet les revêtements obtenus après une cuisson de 15 minutes à 200°C, au test de vieillissement accéléré (test QUV décrit plus haut) afin d'en évaluer la résistance aux rayons UV. On a déterminé leur brillance, leur adhérence au métal et leur aspect avant et après 1.000 heures d'exposition; on a également déterminé le changement de teinte delta E des revêtements entre le début et la fin de l'expérience.

Les résultats ainsi obtenus sont reproduits dans le tableau V dans lequel :

la 1e ligne donne le numéro du copolymère acrylique entrant dans la composition,

la 2e ligne, le numéro de la composition contenant le copolymère acrylique et le polyester 1b, et qui fournit des revêtements blancs,

les 3e, 5e et 7e lignes, respectivement la brillance, l'adhérence et l'aspect des revêtements blancs, déterminés chaque fois au début (0 heure) et à la fin (1000 heures) de l'expérience,

la 9e ligne, le changement de teinte delta E de ces revêtements blancs entre le début et la fin de l'expérience,

la 10e ligne, le numéro de la composition contenant le copolymère acrylique et le polyester 1b, et qui fournit des revêtements gris,

les 11e, 13e et 15e lignes, respectivement la brillance, l'adhérence et l'aspect des revêtements gris, déterminés chaque fois au début (0 heure) et à la fin (1000 heures) de l'expérience,

la 17e ligne, le changement de teinte delta E de ces revêtements gris.

TABLEAU V

| Vieillissement accéléré des revêtements. | | | | | | | |
|---|---|---|---|---|---|---|---|
| Copolymère n° | | 2g | 2c | 2i | 2j | 2a | 2n |
| Composition n° | | 3.7 | 3.3 | 3.9 | 3.10(1) | 3.1 | 3.14 |
| Brillance | - 0 h | 9 | 7 | 10 | 41 | 7 | 10 |
| | - 1000 h | 8 | 8 | 9 | 31 | 7 | 10 |
| Adhérence | - 0 h | 10 | 10 | 10 | 10 | 10 | 10 |

TABLEAU V   (suite)

| Vieillissement accéléré des revêtements. | | | | | | | |
|---|---|---|---|---|---|---|---|
| | - 1000 h | 10 | 10 | 10 | 10 | 10 | 10 |
| Aspect | - 0 h | B | B | B | B | B | B |
| | - 1000 h | B | B | B | B | B | B |
| Delta E | | 0,2 | 0,3 | 0,2 | 0,5 | 0,4 | 0,4 |
| Copolymère n° | | 2g | 2c | 2i | 2j | 2a | 2n |
| Composition n° | | 3.22 | 3.23 | 3.24 | 3.25(1) | 3.26 | 3.27 |
| Brillance | - 0 h | 10 | 8 | 10 | 42 | 8 | 9 |
| | - 1000 h | 10 | 7 | 9 | 35 | 9 | 9 |
| Adhérence | - 0 h | 10 | 10 | 10 | 10 | 10 | 10 |
| | - 1000 h | 10 | 10 | 10 | 10 | 10 | 10 |
| Aspect | - 0 h | B | B | B | B | B | B |
| | - 1000 h | B | B | B | B | B | B |
| Delta E | | 0,3 | 0,4 | 0,5 | 0,4 | 0,2 | 0,3 |
| (1) à titre comparatif | | | | | | | |

Comme le montrent les résultats du Tableau V, les revêtements mats obtenus selon l'invention présentent une résistance remarquable aux intempéries. Leur adhérence, leur aspect et leur brillance ne varient pratiquement pas après 1.000 heures de vieillissement accéléré; le changement de teinte delta E est négligeable (delta E inférieur ou égal à 0,5), que celle-ci soit blanche ou grise.

**Revendications**

1. Compositions thermodurcissables en poudre comprenant comme liant un mélange d'un polyester contenant des groupes carboxyle et d'un copolymère acrylique contenant des groupes glycidyle caractérisées en ce que le mélange contient

   a) un polyester linéaire contenant des groupes carboxyle ayant un indice d'acide compris entre 20 et 50 mg de KOH/g, et
   b) un copolymère acrylique contenant des groupes glycidyle obtenu à partir

   - de 5% à 30% en poids d'acrylate ou méthacrylate de glycidyle, et
   - de 70% à 95% en poids de méthacrylate de méthyle, jusqu'à 25% du poids total de méthacrylate de méthyle pouvant être remplacé par un autre monomère vinylique, ledit copolymère acrylique ayant un poids moléculaire moyen en nombre ($\overline{M}n$) compris entre environ 4.000 et environ 10.000.

2. Compositions selon la revendication 1, caractérisées en ce que le polyester linéaire contenant des groupes carboxyle possède une fonctionnalité de deux et un poids moléculaire moyen en nombre compris entre 2.200 et 6.000.

3. Compositions selon l'une quelconque des revendications 1 et 2, caractérisées en ce que le constituant acide du polyester linéaire contenant des groupes carboxyle est un acide organique dicarboxylique choisi parmi l'acide téréphtalique, l'acide isophtalique, l'acide phtalique, l'acide adipique, l'acide succinique et l'acide 1,4-cyclohexane-dicarboxylique, seuls ou en mélange.

4. Compositions selon l'une quelconque des revendications 1 à 3, caractérisées en ce que le constituant alcoolique du polyester linéaire contenant des groupes carboxyle est un composé organique dihydroxylé choisi parmi le néopentylglycol, l'éthylèneglycol, le diéthylèneglycol, le 1,4-butanediol, le 1,6-hexanediol, l'hydroxypivalate de néopentylglycol, le 1,4-cyclohexanediméthanol et le 2,2-bis(4-hydroxycyclohexyl)-propane, seuls ou en mélange.

5. Compositions selon l'une quelconque des revendications 1 à 4, caractérisées en ce que le monomère vinylique pouvant remplacer le méthacrylate de méthyle dans le copolymère acrylique contenant des groupes glycidyle est choisi parmi l'acrylate de butyle, l'acrylate de méthyle, l'acrylate d'éthyle, l'acrylate de 2-éthylhexyle, le méthacrylate d'éthyle, le méthacrylate de butyle et le styrène, seuls ou en mélange.

6. Compositions selon l'une quelconque des revendications 1 à 5, caractérisées en ce que le copolymère acrylique contenant des groupes glycidyle a un poids moléculaire moyen en nombre compris dans l'intervalle de plus de 5.000 à 9.000.

7. Compositions selon l'une quelconque des revendications 1 à 6, caractérisées en ce que le rapport de quantité entre le polyester linéaire contenant des groupes carboxyle et le copolymère acrylique contenant des groupes glycidyle est tel qu'il y a de 0,5 à 1,5, de préférence de 0,8 à 1,2 équivalents de groupes carboxyle par équivalent de groupe époxy dans le copolymère acrylique.

8. Procédé d'obtention d'un revêtement mat sur un article, caractérisé en ce qu'on applique sur ledit article une composition thermodurcissable en poudre selon l'une quelconque des revendications 1 à 7 et en ce qu'on fait subir à l'article ainsi revêtu une cuisson à une température de 160 à 210°C pendant une durée pouvant atteindre 30 minutes.

9. Vernis et peintures obtenus avec les compositions thermodurcissables en poudre selon l'une quelconque des revendications 1 à 7.

10. Revêtements mats obtenus à partir des compositions thermodurcissables en poudre selon l'une quelconque des revendications 1 à 7.

11. Articles revêtus entièrement ou partiellement par le procédé selon la revendication 8.

**Patentansprüche**

1. Wärmehärtbare pulverförmige Zusammensetzungen, die als Bindemittel ein Gemisch eines Polyesters mit Carboxylgruppen und eines Acrylcopolymers mit Glycidylgruppen umfassen, dadurch gekennzeichnet, daß das Gemisch enthält:

a) einen linearen Polyester mit Carboxylgruppen, der eine Säurezahl zwischen 20 und 50 mg KOH/g aufweist, und
b) ein Acrylcopolymer mit Glycidylgruppen, das erhalten wird aus

- 5 bis 30 Gew.-% Glycidylacrylat oder -methacrylat und
- 70 bis 95 Gew.-% Methylmethacrylat, wobei bis zu 25% des Gesamtgewichts an Methylmethacrylat durch ein anderes Vinylmonomer ersetzt werden können und besagtes Acrylcopolymer ein Zahlenmittel des Molekulargewicht ($\bar{M}$n) zwischen etwa 4.000 und etwa 10.000 aufweist.

2. Zusammensetzungen gemäß Anspruch 1, dadurch gekennzeichnet, daß der lineare Polyester mit Carboxylgruppen eine Funktionalität von zwei und ein Zahlenmittel des Molekulargewichts zwischen 2.200 und 6.000 besitzt.

3. Zusammensetzungen gemäß einem der Ansprüche 1 und 2, dadurch gekennzeichnet, daß der Säurebestandteil des linearen Polyesters mit Carboxylgruppen eine organische Dicarbonsäure ist, die unter Terephthalsäure, Isophthalsäure, Phthalsäure, Adipinsäure, Bemsteinsäure und 1,4-Cyclohexandicarbonsäure. allein oder im Gemisch, ausgewählt ist.

4. Zusammensetzungen gemäß einem der Ansprüche 1 bis 3, dadurch gekennzeichnet, daß der Alkoholbestandteil des linearen Polyesters mit Carboxylgruppen eine organische Dihydroxyverbindung ist, die unter Neopentylglykol, Ethylenglykol, Diethylenglykol, 1,4-Butandiol, 1,6-Hexandiol, Neopentylglykolhydroxypivalat, 1, 4-Cyclohexandimethanol und 2,2-Bis(4-hydroxycyclohexyl)-propan, allein oder im Gemisch, ausgewählt ist.

5. Zusammensetzungen gemäß einem der Ansprüche 1 bis 4, dadurch gekennzeichnet, daß das Vinylmonomer, das das Methylmethacrylat in dem Acrylcopolymer mit Glycidylgruppen ersetzen kann, unter Butylacrylat, Methylacrylat, Ethylacrylat, 2-Ethylhexylacrylat, Ethylmethacrylat, Butylmethacrylat und Styrol. allein oder im Gemisch, ausgewählt ist.

**6.** Zusammensetzungen gemäß einem der Ansprüche 1 bis 5, dadurch gekennzeichnet, daß das Acrylcopolymer mit Glycidylgruppen ein Zahlenmittel des Molekulargewichts im Bereich von über 5.000 bis 9.000 aufweist.

**7.** Zusammensetzungen gemäß einem der Ansprüche 1 bis 6, dadurch gekennzeichnet, daß das Mengenverhältnis zwischen dem linearen Polyester mit Carboxylgruppen und dem Arcylcopolymer mit Glycidylgruppen so ist, daß es 0,5 bis 1,5, vorzugsweise 0,8 bis 1,2 Äquivalente Carboxylgruppen pro Äquivalent Epoxygruppe im Acrylcopolymer gibt.

**8.** Verfahren zur Herstellung einer matten Beschichtung auf einem Gegenstand, dadurch gekennzeichnet, daß man auf besagten Gegenstand eine wärmehärtbare pulverförmige Zusammensetzung gemäß einem der Ansprüche 1 bis 7 aufbringt und daß man den so beschichteten Gegenstand bei einer Temperatur von 160 bis 210 °C während einer Dauer, die 30 Minuten erreichen kann, aushärtet.

**9.** Lacke und Farben, die mit den wärmehärtbaren pulverförmigen Zusammensetzungen gemäß einem der Ansprüche 1 bis 7 erhalten werden.

**10.** Matte Beschichtungen, die aus den wärmehärtbaren pulverförmigen Zusammensetzungen gemäß einem der Ansprüche 1 bis 7 erhalten werden.

**11.** Durch das Verfahren gemäß Anspruch 8 vollständig oder teilweise beschichtete Gegenstände.

**Claims**

**1.** Powdered thermosetting compositions comprising as binder a mixture of a carboxyl group-containing polyester and of a glycidyl group-containing acrylic copolymer characterised in that the mixture contains

(a) a linear carboxyl group-containing polyester having an acid number comprised between 20 and 50 mg KOH/g, and

(b) a glycidyl group-containing acrylic copolymer obtained

- from 5% to 30% by weight of glycidyl acrylate or methacrylate, and
- from 70% to 95% by weight of methyl methacrylate, whereby up to 25% of the total weight of methyl methacrylate can be replaced by another vinyl monomer, said acrylic copolymer having a number-average molecular weight ($\overline{M}n$) comprised between about 4,000 and about 10,000.

**2.** Compositions according to claim 1, characterised in that the linear carboxyl group-containing polyester has a functionality of two and a number-average molecular weight comprised between 2,200 and 6,000.

**3.** Compositions according to any of claims 1 or 2, characterised in that the acid constituent of the linear carboxyl group-containing polyester is an organic dicarboxylic acid selected from the group consisting of terephthalic acid, isophthalic acid, phthalic acid, adipic acid, succinic acid and 1,4-cyclohexanedicarboxylic acid, taken alone or in admixture.

**4.** Compositions according to any of claims 1 to 3, characterised in that the alcoholic constituent of the linear carboxyl group-containing polyester is a dihydroxylated organic compound selected from neopentyl glycol, ethylene glycol, diethylene glycol, 1,4-butanediol, 1,6-hexanediol, neopentyl glycol hydroxypivalate, 1,4-cyclohexanedimethanol and 2,2-bis(4-hydroxycyclohexyl)-propane, taken alone or in admixture.

**5.** Compositions according to any of claims 1 to 4, characterised in that the vinyl monomer which can replace methyl methacrylate in the glycidyl group-containing acrylic copolymer is selected from butyl acrylate, methyl acrylate, ethyl acrylate, 2-ethylhexyl acrylate, ethyl methacrylate, butyl methacrylate and styrene, taken alone or in admixture.

**6.** Compositions according to any of claims 1 to 5, characterised in that the glycidyl group-containing acrylic copolymer has a number-average molecular weight comprised within the range of from more than 5,000 to 9,000.

**7.** Compositions according to any of claims 1 to 6, characterised in that the amount ratio between the linear carboxyl group-containing polyester and the glycidyl group-containing acrylic copolymer is such that there are from 0.5 to 1.5, preferably from 0.8 to 1.2 equivalents of carboxyl groups per equivalent of epoxy groups in the acrylic copolymer.

8. A process for the preparation of a matt coating on an article, characterised in that a powdered thermosetting composition according to any of claims 1 to 7 is applied to said article and in that the so-coated article is submitted to curing at a temperature of from 160 to 210°C for a period of up to about 30 minutes.

9. Varnishes and paints obtained from the powdered thermosetting compositions according to any of claims 1 to 7.

10. Matt coatings obtained from the powdered thermosetting compositions according to any of claims 1 to 7.

11. Articles coated entirely or partly by the process according to claim 8.